Europäisches Patentamt

European Patent Office

Office européen des brevets

(19)

(11) **EP 0 698 892 B1**

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(51) Int Cl.⁶: **G12B 1/00**

(21) Anmeldenummer: **95110526.1**

(22) Anmeldetag: **06.07.1995**

(54) **Stützelement zur Kompensation der thermischen Ausdehnung**

Supporting element for compensating thermal expansion

Dispositif de support permettant la compensation de la dilatation thermique

(84) Benannte Vertragsstaaten:
**BE CH DE FR GB IT LI**

(30) Priorität: **23.08.1994 DE 4429805**

(43) Veröffentlichungstag der Anmeldung:
**28.02.1996 Patentblatt 1996/09**

(73) Patentinhaber: **Forschungszentrum Karlsruhe GmbH**
**76133 Karlsruhe (DE)**

(72) Erfinder: **Hartwig, Günther, Dr.**
**D-76646 Bruchsal (DE)**

(74) Vertreter: **Rückert, Friedrich, Dr.**
**Forschungszentrum Karlsruhe GmbH**
**Patente und Lizenzen**
**Weberstrasse 5**
**76133 Karlsruhe (DE)**

(56) Entgegenhaltungen:
**DE-A- 3 733 446**     **US-A- 4 781 034**

- PATENT ABSTRACTS OF JAPAN vol. 14, no. 70 (E-0886) 8. Februar 1990 & JP-A-01 289 179 (SHIMADZU CORP) 21. November 1989
- PATENT ABSTRACTS OF JAPAN vol. 940, no. 10 (?-0) (0) & JP-A-06 291 372 (TOYOBO CO) 18. Oktober 1994
- PATENT ABSTRACTS OF JAPAN vol. 940, no. 10 (?-0) (0) & JP-A-06 291 373 (TOYOBO CO) 18. Oktober 1994
- PATENT ABSTRACTS OF JAPAN vol. 18, no. 585 (M-1700) 9. November 1994 & JP-A-06 218 828 (TOYOBO CO) 9. August 1994
- PATENT ABSTRACTS OF JAPAN vol. 14, no. 426 (P-1105) 13. September 1990 & JP-A-02 166 403 (FUJITSU) 27. Juni 1990
- ADVANCES IN CRYOGENIC ENGINEERING (MATERIALS), Bd.36, Nr.B, 1990, NEW YORK Seiten 1007 - 1009 G. SCHWARZ,G. HARTUNG 'Thermal expansion of polymers and fibre composites at low temperatures'
- CRYOGENICS, Bd.34, Nr.5, 1994 Seiten 357 - 360, XP000449788 K.F. WEINTZ, M.I. BASCI, J.M. UBER 'SHOOT Dewar support strap design and performance'

## Beschreibung

Die Erfindung betrifft ein Stützelement zur Kompensation der thermischen Ausdehnung gemäß Anspruch 1 oder 2. Stützelemente zum Abstützen von Vorrichtungen, die stark wechselnden Temperaturen unterworfen sind, müssen die Dimensionsveränderung infolge der Wärmedehnung kompensieren. Bei dieser Kompensation soll auf eine Nachregulierung während der Temperaturveränderung durch mechanisch wirkende Stellglieder verzichtet werden, weil eine solche Nachregulierung einen hohen Aufwand erfordert. Beispiele für Vorrichtungen, die stark wechselnden Temperaturen ausgesetzt sind, stellen große supraleitende Spulen dar. Deren Abstützung bereitet besondere Probleme, weil diese Spulen von Raumtemperatur auf die Temperatur flüssigen Stickstoffs oder flüssigen Heliums abgekühlt werden müssen. Hierbei macht sich der positive thermische Ausdehnungskoeffizient der Spulen durch Kontraktion stark bemerkbar. Werden die Spulen durch Stützelemente abgestützt, die die Wärmedehnung nicht oder nicht ausreichend ausgleichen, besteht die Gefahr, daß die Abstützung bei sinkender Temperatur unwirksam wird oder die Spulen dezentriert werden. Wegen der Kontraktion der Spulen wird ein Stützelement benötigt, das sich bei sinkender Temperatur ausdehnt, damit die Kontraktion ausgleicht und die Spule in einer abgestützten Lage hält.

Soll eine Vorrichtung erwärmt werden, wird ein Stützelement benötigt, das die Wärmeausdehnung kompensiert. Das Stützelement muß sich daher bei steigender Temperatur kontrahieren, damit die Ausdehnung der Vorrichtung kompensiert wird und die Vorrichtung in einer konstanten Lage gehalten wird.

Der Kontraktionsbewegung beim Abkühlen kann entgegengewirkt werden, wenn Stützelemente aus einem Material mit negativem thermischen Ausdehnungskoeffizienten vorgesehen werden. Die Stützelemente werden auf der jeweiligen Temperatur der abgestützten Vorrichtung gehalten. Es ist bekannt (G. Schwarz und G. Hartwig: "Thermal expansion of polymers and fibre composites at low temperatures", Advances in Cryogenic Engineering (Materials), Vol. 36, pp. 1007-1009, Plenum Press, New York 1990), daß z. B. aus Kohlenstoff- oder Kevlar-Fasern hergestellte Körper, bei denen jeweils parallel verlaufende Fasern schichtweise angeordnet sind, wobei die Fasern benachbarter Schichten einen Winkel miteinander einschließen, einen negativen thermischen Ausdehnungskoeffizienzen aufweisen. Solche Körper können z. B. gewickelte Rohre darstellen, die aus mehreren Wicklungslagen bestehen, wobei die Fasern der ersten Wicklungslage zur Rohrachse einen Winkel von $+\alpha$, die Fasern der zweiten Wicklungslage einen Winkel von $-\alpha$, die Fasern der dritten Wicklungslage wiederum einen Winkel von $+\alpha$ etc. mit der Rohrachse einschließen. Da die positiven Ausdehnungskoeffizienten, etwa von supraleitenden Spulen, dem Betrag nach im allgemeinen wesentlich größer sind als die negativen Ausdehnungskoeffizienten solcher Körper, müßten solche Stützelemente mit einem negativen Ausdehnungskoeffizienten eine beträchtliche Größe annehmen, um die temperaturbedingte Ausdehnung bzw. Schrumpfung von Vorrichtungen, wie z. B. supraleitenden Spulen mit positivem Ausdehnungskoeffizienten, vollständig kompensieren zu können.

In der Veröffentlichung "SHOOT Dewar support strap design and performance" von K. F. Weintz, M. I. Basci, J. M. Uber, Cryogenics 1994 Vol. 34, No. 5, pp. 357-360 werden vorgespannte Halteschlaufen aus Fiberglas zur Fixierung von Kryostaten bei einem Raumfahrtexperiment vorgeschlagen.

Aufgabe der Erfindung ist es, Stützelemente anzugeben, die sich kompakt aufbauen lassen und mit deren Hilfe dennoch eine große temperaturbedingte Ausdehnung bzw. Schrumpfung von Vorrichtungen mit positivem oder negativem Ausdehnungskoeffizienten kompensiert werden kann.

Die Aufgabe wird erfindungsgemäß durch das in Anspruch 1 oder 2 beschriebene Stützelement gelöst. In den abhängigen Ansprüchen sind bevorzugte Ausgestaltungen dieser Stützelemente angegeben.

Das erfindungsgemäße Stützelement gemäß Anspruch 1 stützt eine Vorrichtung ab, die auf tiefe Temperaturen abgekühlt wird und einen positiven Ausdehnungskoeffizienten aufweist. Diese Vorrichtung kann eine supraleitende Spule sein, wie sie z. B. für Kernfusionsexperimente benötigt wird. Mit dem erfindungsgemäßen Stützelement läßt sich die Dimensionsänderung der Spule, die durch wechselnde Temperaturen entsteht, vollständig kompensieren. Das Stützelement gleicht die Verminderung des Durchmessers der Spule aus, wenn die Spule von Raumtemperatur auf Arbeitstemperatur gebracht wird und die Stützvorrichtung auf jeweils derselben Temperatur gehalten wird.

Das Stützelement gemäß Anspruch 1 wird im folgenden anhand von Figuren näher erläutert. Es zeigen:

Fig. 1 eine erste Ausführungsform des erfindungsgemäßen Stützelements,

Fig. 2 einen Querschnitt durch eine zweite Ausführungsform des erfindungsgemäßen Stützelements,

Fig. 3 die Anwendung mehrerer erfindungsgemäßen Stützelemente zum Abstützen einer supraleitenden Spule.

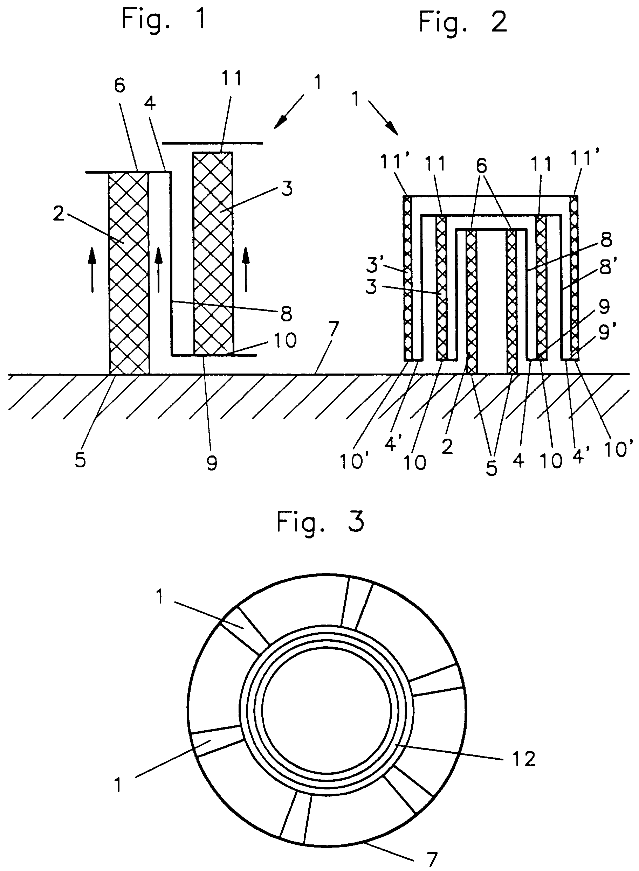

In Fig. 1 ist eine erste Ausführungsform des erfindungsgemäßen Stützelements 1 gemäß Anspruch 1 dargestellt, die aus zwei gewickelten Rohren 2, 3 als Tragkörper und einem Bügel 4 besteht. Rohre weisen eine im Vergleich zum Materialeinsatz hohe Tragfähigkeit auf und sind daher zum Abstützen schwerer Vorrichtungen besonders geeignet.

Außerdem sind solche Rohre im Handel erhältlich. Die Wicklungen der Rohre 2, 3 bestehen aus Kohlenstoff- oder Kevlar-Fasern, die einen Winkel von 30° mit der Rohrachse einschließen. Ein Winkel von 30° ergibt einen Tragkörper mit einem großen negativen Ausdehnungskoeffizienten. Bei hoher Traglast kann jedoch ein anderer Winkel vorteilhaft sein.

Beide Rohre 2, 3 bestehen somit aus einem Material, das einen negativen Ausdehnungskoeffizienten aufweist. Das erste Rohr 2 stützt sich mit seinem unteren Ende 5 auf einer Grundplatte 7 ab und steht senkrecht auf der Grundplatte 7. An seinem oberen Ende 6 trägt das erste Rohr 2 den Bügel 4. Dieser Bügel 4 besteht aus einem zur Grundplatte 7 senkrechten Teil 8 und einem zur Grundplatte 7 parallelen Teil 9 und ist aus einem Material mit positivem Ausdehnungskoeffizienten gefertigt. Als Material für den Bügel eignen sich Metalle, insbesondere das Metall Aluminium, das einen hohen positiven Ausdehnungskoeffizienten aufweist. Durch einen möglichst hohen positiven Ausdehnungskoeffizienten des Bügels wird der negative Ausdehnungskoeffizient des gesamten Stützelements verstärkt. Die Form und Dimension des Bügels 4 wird so gewählt, daß er unter dem Druck durch die Vorrichtung nicht verformt wird.

Das zweite Rohr 3 steht senkrecht auf dem Teil 9 des Bügels 4, der parallel zur Grundplatte 7 angeordnet ist. Sein oberes Ende 11 trägt in der gezeigten Ausführungsform die (nicht dargestellte) Vorrichtung, z. B. die supraleitende Spule.

Werden die Spule und mit ihr das erfindungsgemäße Stützelement 1 gemäß Anspruch 1 von Raumtemperatur beispielsweise auf die Temperatur von flüssigem Stickstoff abgekühlt, so dehnen sich die beiden Rohre 2, 3 bei sinkender Temperatur wegen ihres negativen Temperaturkoeffizienten aus, so daß sich ihre Länge vergrößert. Der Bügel 4 mit seinem positiven Ausdehnungskoeffizienten verkürzt sich in seinem zur Grundplatte 7 senkrechten Teil 8 bei sinkender Temperatur, so daß er das zweite Rohr 3 zusätzlich anhebt. Die gesamte Ausdehnung der Stützstruktur zwischen Grundplatte 7 und dem oberen Ende 11 des zweiten Rohres 3 ergibt sich bei sinkender Temperatur somit aus der Summe der Beträge der Ausdehnung bzw. der Kontraktion beider Rohre 2, 3 und des Bügels 4.

Fig. 2 zeigt einen Querschnitt durch eine weitere Ausführungsform des erfindungsgemäßen Stützelements gemäß Anspruch 1. Während auf die Ausführungsform gemäß Fig. 1 ein Kippmoment einwirkt, ist diese Ausführungsform frei von seitlich wirkenden Kräften. Sie kann zudem besonders kompakt gebaut werden.

Die Ausführungsform nach Fig. 2 enthält drei Rohre 2, 3, 3' mit negativem Ausdehnungskoeffizienten und zwei Bügel 4, 4' mit positivem Ausdehnungskoeffizienten. Das innere, erste Rohr 2 steht mit seinem unteren Ende 5 auf der Grundplatte 7 auf. Es trägt an seinem oberen Ende 6 den Bügel 4, dessen zur Grundplatte 7 senkrechter Teil 8 parallel zur Achse des inneren Rohrs 2 verläuft. Der senkrechte Teil 8 des Bügels stellt in dieser Ausführungsform ein zylinderförmiges Teil dar, das an seiner der Grundplatte 7 abgewandten Seite mit einer ersten, kreis- oder kreisringförmigen Kragfläche versehen ist, die sich auf dem oberen Ende 6 des inneren Rohres 2 abstützt. An der der Grundplatte 7 zugewandten Seite des Bügels ist das zur Grundplatte parallel verlaufende Teil 10 des Bügels 4 angebracht. Dieses zweite Teil 10 bildet einen Ring, der eine zweite Kragfläche darstellt. Auf dem Ring steht das zweite Rohr 3 mit seinem unteren Ende 10 auf. Das zweite Rohr 3 umgibt das erste, innere Rohr 2 symmetrisch, überragt dieses jedoch bei sinkender Temperatur, sofern - wie in der Figur dargestellt - eine kreisförmige erste Kragfläche vorgesehen ist. Das obere Ende 11 des zweiten Rohres 3 trägt einen gleichartig gestalteten Bügel 4', dessen erstes, zur Grundplatte 7 senkrechtes Teil 8' gegenüber dem ersten Teil 8 des Bügels 4 mindestens um die Dicke des Bügels verlängert ist. Der zweite, zur Grundplatte 7 parallel verlaufende Teil 9' des Bügels 4' ist wiederum ringförmig ausgebildet und trägt das dritte Rohr 3' an seinem unteren Ende 10'. Mit dem oberen Ende 11' des dritten Rohres 3' wird die Vorrichtung abgestützt.

Der gesamte negative Ausdehnungskoeffizient dieser Ausführungsform ergibt sich aus der Summe der Beträge der Ausdehnungskoeffizienten der drei Rohre 2, 3, 3' und der beiden Bügel 4, 4'. Die Bauhöhe dieses Stützelements ergibt sich aus der Länge des ersten, inneren Rohres 2 und dem das innere Rohr 2 überragenden Teil des dritten, äußeren Rohres 3'. Die beiden äußeren Rohre 3, 3' überragen das innere Rohr 2 jeweils mindestens um eine Länge, die der Dicke der beiden Bügel 4, 4' bei der höchsten vorzusehenden Temperatur entspricht. Bei sinkender Temperatur überragt das obere Ende 11' des dritten, äußeren Rohres 3' das obere Ende 6 des ersten, inneren Rohres 2 in steigendem Ausmaß.

Selbstverständlich werden in beiden Ausführungsformen die Längen der ersten, zur Grundplatte 7 senkrecht verlaufenden Teile 8 (Fig. 1) bzw. 8 und 8' (Fig. 2) der Bügel 4, 4' so gewählt, daß sich die daran angebrachten zweiten, zur Grundplatte waagerecht verlaufenden Teile ) (Fig. 1) bzw. 9 und 9' (Fig. 2) bei einer Temperaturerhöhung nicht auf der Grundplatte abstützen. Besteht die Grundplatte 7 jedoch nur einer Scheibe, die ausschließlich unter dem jeweils ersten Rohr 2 angebracht ist, und stützen sich die Bügel nur über kreisringförmige Kragflächen auf den jeweiligen Rohren ab, bestehen hinsichtlich der Längen der ersten, zur Grundplatte 7 senkrecht verlaufenden Teile 8 und 8' der Bügel 4 und 4' sowie hinsichtlich der Längen der Rohre (2, 3 in Fig. 1; 2, 3, 3' in Fig. 2) keine Einschränkungen.

Fig. 3 zeigt schematisch den Einsatz der erfindungsgemäßen Stützelemente 1 zur ausdehnungskompensierten Abstützung einer supraleitenden Spule 12. Die Grundplatte 7 bildet hier eine rohrförmige Anordnung, die die Stützelemente trägt.

Die Auslegung der erfindungsgemäßen Stützelemente kann gemäß der folgenden Abschätzung vorgenommen werden.

Betrachtet wird die Ausführungsform nach Fig. 1. Es sei: $L_0$ die Gesamtlänge des Stützelements 1 zwischen der Grundplatte 7 und dem oberen Ende 11 des zweiten Rohres 3 bei einer Temperatur $T_1$ und

$\Delta L$ die Veränderung der Gesamtlänge des Stützelements bei einer Temperatur $T_2$, wobei

$T_1 > T_2$,

$L_{Rohr}$ die Länge der beiden Rohre 2, 3 bei $T_1$,

$\Delta L_{Rohr}$ die Veränderung der Rohrlänge bei $T_2$,

$L_{Bügel}$ die Länge des ersten, zur Grundplatte 7 senkrechten Teils 8 des Bügels 4,

$\Delta L_{Bügel}$ die Veränderung der Länge des Teils 8.

Damit ergibt sich für die Längenänderung bei sinkender Temperatur:

$$(\Delta L/L_0)_{gesamt} = \left| (\Delta L_{Rohr\,2}/L_{Rohr\,2}) + (\Delta L_{Rohr\,3}/L_{Rohr\,3}) + (\Delta L_{Bügel}/L_{Bügel}) \right|$$

Für die Terme $\Delta L/L$ gilt jeweils:

$$\Delta L/L = \int^{\Delta T} \alpha \; dT$$

mit:
dem Ausdehnungskoeffizienten $\alpha$ und
$\Delta T = T_1 - T_2$.

Für die Ausführungsform nach Fig. 2 ergibt sich unter der Voraussetzung, daß die beiden Rohre 2, 3 identisch sind und die Ausdehnungskoeffizienten der Rohre bzw. der Bügel

$\alpha_{Rohr} \approx -0,1 \cdot 10^{-6}$/Grad (gewickeltes Rohr, Faserwinkel 30°) ... $\alpha_{Bügel} \approx +0,3 \cdot 10^{-6}$/Grad (Aluminium) betragen,

ein Gesamtausdehnungskoeffizient des Stützelements von

$$\alpha_{gesamt} = (\Delta L/L_0)_{gesamt}/\text{Grad}$$

$$\approx -[|2 \cdot -0,1| + 0,3] \cdot 10^{-6}/\text{Grad} = -0,5 \cdot 10^{-6}/\text{Grad}.$$

Der negative Ausdehnungskoeffizient des Stützelements nach Fig. 1 ist daher dem Betrag nach deutlich größer als der (positive) Ausdehnungskoeffizient des Aluminiums. Noch größere Ausdehnungskoeffizienten werden bei der Ausführungsform nach Fig. 3 bzw. bei Verwendung einer noch größeren Anzahl von Rohren und Bügeln erhalten werden.

Beim Stützelement gemäß Anspruch 2 sind die Materialien der Rohre und der Bügel vertauscht. Die Rohre bestehen aus einem Material mit positivem Ausdehnungskoeffizienten, etwa einem Metall wie z. B. Aluminium, während die Bügel aus einem Material mit negativem Ausdehnungskoeffizienten bestehen. Das Stützelement gemäß Anspruch 2 weist daher einen positiven Ausdehnungskoeffizienten auf, der mit einer verhältnismäßig geringen Bauhöhe erzielt wird. Ein solches Stützelement kann eingesetzt werden, wenn die abgestützte Vorrichtung auf eine hohe Temperatur gebracht werden soll, so daß die Wärmedehnung der Vorrichtung durch eine Verminderung der Höhe des Stützelements kompensiert wird. Die Auslegung dieses Stützelements kann gemäß den obenstehenden Angaben vorgenommen werden. Bei der zu Fig. 2 analogen Ausführungsform ist darauf zu achten, daß die Bügel bei steigender Temperatur einander nicht berühren.

**Patentansprüche**

1.  Stützelement (1) zur Kompensation der thermischen Ausdehnung einer vom Stützelement getragenen Vorrichtung,

    a) das aus mindestens zwei Tragkörpern (2, 3) und einem Bügel (4) zusammengesetzt ist, wobei
    b) der erste Tragkörper (2)

    -   ein unteres (5) und ein oberes (6) Ende aufweist,
    -   aus einem Material mit einem negativen thermischen Ausdehnungskoeffizienten besteht und
    -   mit seinem unteren Ende (5) auf einer Grundplatte (7) steht,

    c) der Bügel (4) am oberen Ende (6) des ersten Tragkörpers (2) angebracht ist,

    -   aus einem Material mit einem positiven thermischen Ausdehnungskoeefizienten gefertigt ist,
    -   einen ersten, zur Ebene der Grundplatte (7) senkrecht verlaufenden Teil (8) aufweist,
    -   dessen Länge so gewählt ist, daß er bei einer Temperaturänderung die Grundplatte (7) nicht berührt, und der
    -   an seinem freien, zur Grundplatte weisenden Ende ein zweites, zur Grundplatte (7) parallel verlaufendes Teil (9) trägt,

    d) der zweite Tragkörper (3)

    -   ein unteres (10) und ein oberes (11) Ende aufweist,
    -   aus einem Material mit einem negativen thermischen Ausdehnungskoeffizienten besteht,
    -   mit seinem unteren Ende (10) auf dem zweiten, zur Grundplatte parallel verlaufenden Teil (9) des Bügels (4) aufsteht und
    -   mit seinem oberen Ende (11) entweder

        (i)
        die Vorrichtung stützt oder
        (ii)
        mindestens einen weiteren Bügel (4') mit jeweils einem weiteren Tragkörper (3') auf dessen zur Grundplatte parallelen Teil (10') trägt, wobei das obere Teil des weiteren Tragkörpers (3') die Vorrichtung stützt.

2.  Stützelement (1) zur Kompensation der thermischen Ausdehnung einer vom Stützelement getragenen Vorrichtung,

    a) das aus mindestens zwei Tragkörpern (2,3) und einem Bügel (4) zusammengesetzt ist, wobei
    b) der erste Tragkörper (2)

    -   ein unteres (5) und ein oberes (6) Ende aufweist,
    -   aus einem Material mit einem positiven thermischen Ausdehnungskoeffizienten besteht und
    -   mit seinem unteren Ende (5) auf einer Grundplatte (7) steht,

    c) der Bügel (4) am oberen Ende (6) des ersten Tragkörpers (2) angebracht ist,

    -   aus einem Material mit einem negativen thermischen Ausdehnungskoeefizienten gefertigt ist,
    -   einen ersten, zur Ebene der Grundplatte (7) senkrecht verlaufenden Teil (8) aufweist,
    -   dessen Länge so gewählt ist, daß er bei einer Temperaturänderung die Grundplatte (7) nicht berührt, und der
    -   an seinem freien, zur Grundplatte weisenden Ende ein zweites, zur Grundplatte (7) parallel verlaufendes Teil (9) trägt,

    d) der zweite Tragkörper (3)

    -   ein unteres (10) und ein oberes (11) Ende aufweist,
    -   aus einem Material mit einem positiven thermischen Ausdehnungskoeffizienten besteht,
    -   mit seinem unteren Ende (10) auf dem zweiten, zur Grundplatte parallel verlaufenden Teil (9) des Bügels (4) aufsteht und

- mit seinem oberen Ende (11) entweder
  die Vorrichtung stützt oder
  mindestens einen weiteren Bügel (4') mit jeweils einem weiteren Tragkörper (3') auf dessen zur Grundplatte parallelen Teil (10') trägt, wobei das obere Teil des weiteren Tragkörpers (3') die Vorrichtung stützt.

3. Stützelement nach Anspruch 1, bei dem als Tragkörper gewickelte Rohre (2, 3) eingesetzt werden, deren Achsen senkrecht zur Grundplatte (7) angeordnet sind und deren Wicklungen aus Kohlenstoff- oder Kevlar-Fasern bestehen, wobei die Wicklungen in einem Winkel von 30° zur Rohrachse angeordnet sind.

4. Stützelement nach Anspruch 1 oder 3 mit einem Bügel (4) aus einem Metall.

5. Stützelement nach Anspruch 4 mit einem Bügel (4) aus Aluminium.

6. Stützelement nach Anspruch 2 bei dem als Tragkörper Metallrohre eingesetzt werden, deren Achsen senkrecht zur Grundplatte angeordnet sind.

7. Stützelement nach Anspruch 2 oder 6 mit einem Bügel, der aus mehreren Schichten zusammengesetzt ist, wobei jede Schicht aus zueinander parallel angeordneten Fasern aus Kohlenstoff oder Kevlar besteht und die Fasern benachbarter Schichten miteinander einen Winkel von 30° einschließen.

## Claims

1. Supporting element (1) for compensating for the thermal expansion of an apparatus, which is carried by the supporting element,

   a) which supporting element comprises at least two carrying bodies (2, 3) and a clamp (4),
   b) the first carrying body (2)

   - having a lower end (5) and an upper end (6),
   - being formed from a material having a negative coefficient of thermal expansion, and
   - standing with its lower end (5) on a base plate (7),

   c) the clamp (4) being mounted on the upper end (6) of the first carrying body (2),

   - being produced from a material having a positive coefficient of thermal expansion,
   - having a first portion (8), which extends perpendicularly relative to the plane of the base plate (7),
   - its length being so selected that it does not touch the base plate (7) in the event of a change in temperature, and
   - said clamp carrying, on its free end orientated towards the base plate, a second portion (9) which extends parallel to the base plate (7),

   d) the second carrying body (3)

   - having a lower end (10) and an upper end (11),
   - being formed from a material having a negative coefficient of thermal expansion,
   - standing with its lower end (10) on the second portion (9) of the clamp (4), which portion extends parallel to the base plate, and
   - with its upper end (11) either

     (i)
     supporting the apparatus or
     (ii)
     carrying at least one additional clamp (4') with a respective additional carrying body (3') on its portion (10') parallel to the base plate, the upper portion of the additional carrying body (3') supporting the apparatus.

2. Supporting element (1) for compensating for the thermal expansion of an apparatus, which is carried by the supporting element,

   a) which supporting element comprises at least two carrying bodies (2, 3) and a clamp (4),
   b) the first carrying body (2)

   - having a lower end (5) and an upper end (6),
   - being formed from a material having a positive coefficient of thermal expansion, and
   - standing with its lower end (5) on a base plate (7),

   c) the clamp (4) being mounted on the upper end (6) of the first carrying body (2),

   - being produced from a material having a negative coefficient of thermal expansion,
   - having a first portion (8), which extends perpendicularly relative to the plane of the base plate (7),
   - its length being so selected that it does not touch the base plate (7) in the event of a change in temperature, and
   - said clamp carrying, on its free end orientated towards the base plate, a second portion (9) which extends parallel to the base plate (7),

   d) the second carrying body (3)

   - having a lower end (10) and an upper end (11),
   - being formed from a material having a positive coefficient of thermal expansion,
   - standing with its lower end (10) on the second portion (9) of the clamp (4), which portion extends parallel to the base plate, and
   - with its upper end (11) either

     supporting the apparatus or
     carrying at least one additional clamp (4') with a respective additional carrying body (3') on its portion (10') parallel to the base plate, the upper portion of the additional carrying body (3') supporting the apparatus.

3. Supporting element according to claim 1, wherein wound pipes (2, 3) are used as the carrying bodies, the axes of which are disposed perpendicular to the base plate (7), and the windings of which are formed from carbon or kevlar fibres, the windings being disposed at an angle of 30° relative to the pipe axis.

4. Supporting element according to claim 1 or 3, having a clamp (4) formed from a metal.

5. Supporting element according to claim 4, having a clamp (4) formed from aluminium.

6. Supporting element according to claim 2, wherein metal pipes are used as the carrying bodies, the axes of which are disposed perpendicular to the base plate.

7. Supporting element according to claim 2 or 6, having a clamp which comprises a plurality of layers, each layer being formed from carbon or kevlar fibres, which are disposed parallel to one another, and the fibres of adjacent layers forming with one another an angle of 30°.

**Revendications**

1. Elément de support (1) pour compenser la dilatation thermique d'un dispositif porté par cet élément de support,

   a) cet élément se composant d'au moins deux corps de support (2, 3) et d'un étrier (4), dont
   b) le premier corps de support (2) :

   - comprend une extrémité inférieure (5) et une extrémité supérieure (6),
   - est réalisé en une matière à coefficient de dilatation thermique négatif et
   - a son extrémité inférieure (5) venant sur une plaque de base (7),

c) l'étrier (4) prévu à l'extrémité supérieure (6) du premier corps de support (2) :

- est fabriqué en une matière à coefficient de dilatation thermique positif,
- comporte une première partie (8) perpendiculaire au plan de la plaque de base (7),
- sa longueur est choisie pour que sous l'effet d'une variation de température de la plaque de base (7), il ne touche pas et
- à son extrémité libre tournée vers la plaque de base, il porte une seconde partie (9), parallèle à la plaque de base (7),

d) le second corps de support (3)

- présente une extrémité inférieure (10)) et une extrémité supérieure (11)
- est réalisé en une matière à coefficient de dilatation thermique négatif,
- son extrémité inférieure (10) repose sur la seconde partie (9) de l'étrier (4), parallèle à la plaque de base et
- son extrémité supérieure (11) (i) soit supporte le dispositif (ii) soit porte au moins un autre étrier (4') avec un autre corps de support (3) sur sa partie (10') parallèle à la plaque de base, la partie supérieure du corps de support (3') soutenant le dispositif.

2. Elément de support (1) pour compenser la dilatation thermique d'un dispositif porté par cet élément de support,

a) composé d'au moins deux corps de support (2, 3) et d'un étrier (4),
b) le premier corps de support (2) :

- a une extrémité inférieure (5) et une extrémité supérieure (6),
- est réalisé en une matière à coefficient de dilatation thermique positif et,
- repose par son extrémité inférieure (5) sur une plaque de base (7),

c) l'étrier (4) prévu à l'extrémité supérieure (6) du premier corps de support (2) :

- est fabriqué en une matière à coefficient de dilatation thermique négatif,
- comporte une première partie (8) perpendiculaire du plan de la plaque de base (7),
- sa longueur est choisie pour que sous l'effet d'une variation de température, il ne touche pas la plaque de base (7), et
- son extrémité libre tournée vers la plaque de base (7), porte une seconde partie (9) parallèle à la plaque de base (7),

d) le second corps de support (3)

- comporte une extrémité inférieure (10) et une extrémité supérieure (11),
- est réalisé en une matière à coefficient de dilatation thermique positif,
- son extrémité inférieure (10) repose sur la seconde partie (9) de l'étrier (4) parallèle à la plaque de base et,
- son extrémité supérieure (11) soit supporte le dispositif, soit supporte au moins un autre étrier (4') avec chaque fois un autre organe de support (3') porté par sa partie (10') parallèle à la plaque de base, la partie supérieure de l'autre corps de support (3') soutenant le dispositif.

3. Elément de support selon la revendication 1, dans lequel le corps de support est formé par des tubes enroulés (2, 3) dont les axes sont perpendiculaires à la plaque de base (7) et dont les enroulements sont en fibres de carbone ou de Kevlar, les spires faisant un angle de 30° par rapport à l'axe du tube.

4. Elément de support selon la revendication 1 ou 3 comportant un étrier (4) en un métal.

5. Elément de support selon la revendication 4, caractérisé en ce que l'étrier (4) est en aluminium.

6. Elément de support selon la revendication 2 utilisant des tubes métalliques comme corps de support et dont les axes sont perpendiculaires à la plaque de base.

7. Elément de support selon la revendication 2 ou 6 comprenant un étrier composé de plusieurs couches, chaque couche étant formée de fibres en carbone ou en Kevlar, parallèles et les fibres des couches voisines font entre elles un angle de 30°.

## Fig. 1

## Fig. 2

## Fig. 3